# EUROPEAN PATENT APPLICATION

(11) **EP 4 033 560 A1**
(43) Date of publication of application: **27.07.2022**
(21) Application number: 20865496.2
(22) Date of filing: 16.09.2020

(54) **CERAMIC MICROSPHERE, SEPARATOR COMPRISING CERAMIC MICROSPHERE, AND LITHIUM ION BATTERY COMPRISING SEPARATOR**

(30) Priority: 18.09.2019 CN 201910883010
(71) Applicant: Zhuhai CosMX Battery Co., Ltd., Zhuhai, Guangdong 519100 (CN)
(72) Inventor: LI, Suli, Zhuhai, Guangdong 519100 (CN); TANG, Weichao, Zhuhai, Guangdong 519100 (CN); ZHANG, Zulai, Zhuhai, Guangdong 519100 (CN); ZHAO, Wei, Zhuhai, Guangdong 519100 (CN); LI, Junyi, Zhuhai, Guangdong 519100 (CN); XU, Yanming, Zhuhai, Guangdong 519100 (CN)
(74) Representative: Elzaburu S.L.P.
(86) International application number: PCT/CN2020/115616
(87) International publication number: WO 2021/052365

(57) **Abstract**

The present invention provides a ceramic microsphere, a diaphragm including the ceramic microsphere and a lithium ion battery including the diaphragm. The present invention differs from a diaphragm of a conventional lithium ion battery mainly in that, two kinds of coating microspheres, the conductive microsphere and the ceramic microsphere, respectively, which have high safety performance by heat sensitively blocking lithium ions and heat sensitively conducting electrons, are prepared by using a polymer coating method, and the two kinds of coating microspheres with high safety are applied to the diaphragm of the lithium ion battery, so that the diaphragm of the lithium ion battery has two functions of heat sensitively blocking lithium ions and heat sensitively conducting, which can effectively improve the safety performance of the lithium ion battery.

## Description

### TECHNICAL FIELD

The present invention belongs to the technical field of microspheres and lithium ion batteries, and particularly relates to a ceramic microsphere, a diaphragm including the ceramic microsphere and having high safety and a lithium ion battery including the diaphragm.

### BACKGROUND

Compared with a traditional secondary battery, a lithium ion battery has advantages of high energy density, environmental protection, and long service life, and has been widely used in the fields of power batteries, digital products and energy storage etc. The lithium ion battery mainly constitutes of a positive electrode material, a negative electrode material, a diaphragm and electrolyte, etc. Due to the material system and structural characteristics of the lithium ion battery, the lithium ion battery may lead to increased battery temperature during actual use, while the increased temperature will accelerate a speed of an exothermic reaction in the lithium ion battery, thereby causing thermal runaway and safety accidents. At present, in order to improve the safety performance of the lithium ion, some researchers have made improvements in aspects such as a lithium ion power battery pack management system, a lithium ion battery cooling system, and a lithium ion safety structure. However, the lithium ion power battery pack management system and the lithium ion battery cooling system belong to palliatives, Only the development of a material for a lithium ion safety structure can fundamentally improve safety issue of the lithium ion battery, and is mainly directed to high safety diaphragm, PTC-effect coating layer, flame retardant electrolyte and other directions.

In order to improve the safety performance of the diaphragm of the lithium ion battery, literatures disclosed a voltage-sensitive diaphragm, which is obtained by adding microcrystalline graphite to a chloroform solution containing poly(3-decyl-thiophene), homogenizing it by mechanical ball milling to obtain a diaphragm-modifying slurry, impregnating the diaphragm and drying. The diaphragm has a reversible overcharge protection function, and especially it plays an effective reversible overcharge protection for a lithium iron phosphate battery. However, the diaphragm has a large degree of self-discharge and a small voltage sensitive range, which limits its application in power batteries with high energy density. There are also literatures which disclosed a diaphragm with thermal sealing and excellent air permeability, which is safe diaphragm for a secondary battery and is obtained by spinning a heat sensitive material onto a substrate film by using an electro spinning technology and drying. However, the used of the electro spinning technology in the literatures has disadvantages such as high cost and difficult industrialization, which limits its application.

### SUMMARY

In order to improve deficiencies in the prior art, an object of the present invention is to provide a diaphragm including a coating layer and a lithium ion battery including the diaphragm, where the coating layer is obtained by coating of a mixed system of a conductive microsphere having a core-shell structure and a ceramic microsphere having a core-shell structure; both of the conductive microsphere and the ceramic microsphere have a core-shell structure, namely including a shell and a core; in the conductive microsphere, a material for forming the shell includes a heat sensitive polymer, a material for forming the core includes a conductive material; and in the ceramic microsphere, a material for forming the shell includes a heat sensitive polymer and a conductive agent, and a material for forming the core includes a ceramic material.

In the coating layer of the diaphragm, the ceramic microsphere and the conductive microsphere are stacked to form a stacked layer. When the lithium ion battery is heated to a heat sensitive temperature range, the heat sensitive polymer in the conductive microsphere undergoes a phase change to release the conductive material enclosed inside, the conductive material forms a micro short circuit inside the lithium ion battery, reducing the power of the lithium ion battery and improving the safety performance of the lithium ion battery; at the same time, the heat sensitive polymer on the surface of the ceramic microsphere begin s to melt, and a continuous blocking layer is formed in the stacked layer, the blocking layer is mainly composed of a heat sensitive polymer and a conductive agent, and has functions of blocking lithium ion transmission and conducting electrons, which can effectively improve the safety performance of the lithium ion battery.

In order to achieve the above object, the present invention adopts the following technical solutions:
A ceramic microsphere having a core-shell structure, namely including a shell and a core, where a material for forming the shell includes a heat sensitive polymer and a conductive agent, and a material for forming the core includes a ceramic material.

According to the present invention, the ceramic microsphere may be used in the field of lithium ion batteries, and may also be used in the fields of semiconductors, coatings, and primary or secondary batteries of other ion systems.

There is provided a preparation method of the ceramic microsphere, including steps below:
coating a material for forming a shell, which includes a heat sensitive polymer and a conductive agent, onto a surface of a material for forming a core, which includes a ceramic material, by a liquid phase coating method or a solid phase coating method to prepare the ceramic microsphere; where the ceramic microsphere has a core-shell structure, i.e., including a shell and a core, a material for forming the shell includes a heat sensitive polymer and a conductive agent, and a material for forming the core includes a ceramic material.

A diaphragm including a diaphragm base layer and a coating layer on at least one surface of the diaphragm base layer, and the coating layer is obtained by coating the at least one surface of the diaphragm base layer with a mixed system comprising a conductive microsphere and the ceramic microsphere described above.

There is provided a preparation method of the diaphragm described above, including:
(a) adding the conductive microsphere, the ceramic microsphere, optionally a polymer binder and optionally an auxiliary agent to a solvent, and mixing them to obtain a mixed slurry; and
(b) coating a surface of the diaphragm base layer with the mixed slurry of step (a), to obtain the diaphragm after drying.

A lithium ion battery, including the diaphragm described above.

Beneficial effects of the present invention:
The present invention provides a ceramic microsphere, a diaphragm including a conductive microsphere and the ceramic microsphere and having high safety and a lithium ion battery including the diaphragm. The present invention differs from a diaphragm of a conventional lithium ion battery mainly in that, two kinds of coating microspheres, the conductive microsphere and the ceramic microsphere, respectively, which have high safety performance by heat sensitively blocking lithium ions and heat sensitively conducting electrons, are prepared by using a polymer coating method, and the two kinds of coating microspheres with high safety are applied to the diaphragm of the lithium ion battery, so that the diaphragm of the lithium ion battery has two functions of heat sensitively blocking lithium ions and heat sensitively conducting, which can effectively improve the safety performance of the lithium ion battery.

The present invention uses a polymer with solvent resistance, electrolyte resistance and heat sensitivity to be as a coating layer to prepare two kinds of coating microspheres. The polymer material has heat sensitivity and a heat sensitive range temperature is 100 °C-140 °C, and the polymer material as the coating layer is stable to conventional solvent and conventional electrolyte without dissolution or swelling.

In the two kinds of coating microspheres of present invention, one is a microsphere of a ceramic coated with the heat sensitive blocking material, i.e., the ceramic microsphere, which has a surface that is a composite coating layer of a solvent-resistant, electrolyte-resistant and heat sensitive polymer and a conductive agent, and an interior that is a ceramic material; the other is a microsphere of a conductive material coated with the heat sensitive blocking material, i.e., the conductive microsphere, which has a surface that is a solvent-resistant, electrolyte-resistant and heat sensitive polymer, and an interior that is a conductive material. The two kinds of microspheres are mixed with a binder, an auxiliary agent, etc., than are sprayed, dip-coated, gravure printed, extrusion coated, or transfer coated onto a surface of a base material of the diaphragm to prepare a functional diaphragm, without introducing too many processes and without adding additional coating layer, which can effectively reduce the influence of the introduction of the two kinds of microspheres on the performance of the lithium ion battery and reduce the processing cost of the lithium ion battery.

In addition, the diaphragm including the two kinds of coating microspheres is applied in the lithium ion battery, and when the lithium ion battery is at a high temperature or a thermal runaway temperature reaches the heat sensitive range, the heat sensitive polymer coating layer on the surface of the ceramic microsphere begins to melt and forms a continuous composite blocking layer that blocks the lithium ion and conducts electrons, the composite blocking layer is composed of a heat sensitive polymer and a conductive agent; at the same time, the heat sensitive polymer coating layer on the surface of the conductive microsphere is heated, and when the temperature reaches the heat sensitive range, the polymer on the surface melts and releases the internal conductive material, to form a micro short circuit inside the lithium ion battery, which can effectively improve the safety performance of the lithium ion battery.

The lithium ion diaphragm prepared by the present invention has dual functions of heat sensitively blocking lithium ions from passing through and heat sensitively conducting electrons. Compared with a conventional single heat sensitive material blocking, the present invention can block positive and negative electrodes faster, effectively control the thermal runaway, and meanwhile, a micro short circuit occurs inside, which can effectively slow down the thermal runaway and improve the safety performance of the lithium ion battery.

At the same time, the present invention can prepare functional coating microspheres by selecting the kind of the polymer of the coating layer of the microsphere, and controlling conditions such as a thickness of the coating layer. The coating microspheres can be directly introduced into an existing diaphragm preparation system, and is used in the lithium ion battery, has little influence on the performance of the lithium ion battery, and has good application potential in the field of the lithium ion battery safety.

### BRIEF DESCRIPTION OF DRAWINGS

FIG. 1 is a structural diagram of a conductive microsphere described in the present invention; where "a heat sensitive polymer coating layer" refers to a shell of the conductive microsphere, and a material forming the shell includes a heat sensitive polymer; and "a conductive material" refers to a core of the conductive microsphere, and a material forming the core includes a conductive material.
FIG. 2 is a structural diagram of a ceramic microsphere described in the present invention; where "a heat sensitive polymer coating layer" refers to a shell of the ceramic microsphere, and a material forming the shell includes a heat sensitive polymer and a conductive agent; and "a ceramic particle" refers to a core of the ceramic microsphere, and a material forming the core includes a ceramic material.
FIG. 3 is a structural diagram of a diaphragm described in a preferred embodiment of the present invention; where "a functional microsphere" refers to a conductive microsphere of the present invention.
FIG. 4 is a structural diagram of a diaphragm, which reaches a heat sensitive range, of a preferred embodiment of the present invention that; where "a functional microsphere" refers to a conductive microsphere of the present invention.
FIG. 5 is charge-discharge cycle performance diagrams of batteries of Examples 1-7, Comparative Example 1 and Comparative Examples 3-4.
FIG. 6 shows voltages of batteries of Examples 1-7, Comparative Example 1 and Comparative Examples 3-4 during a temperature rise test.

### DESCRIPTION OF EMBODIMENTS

### [Ceramic Microsphere]

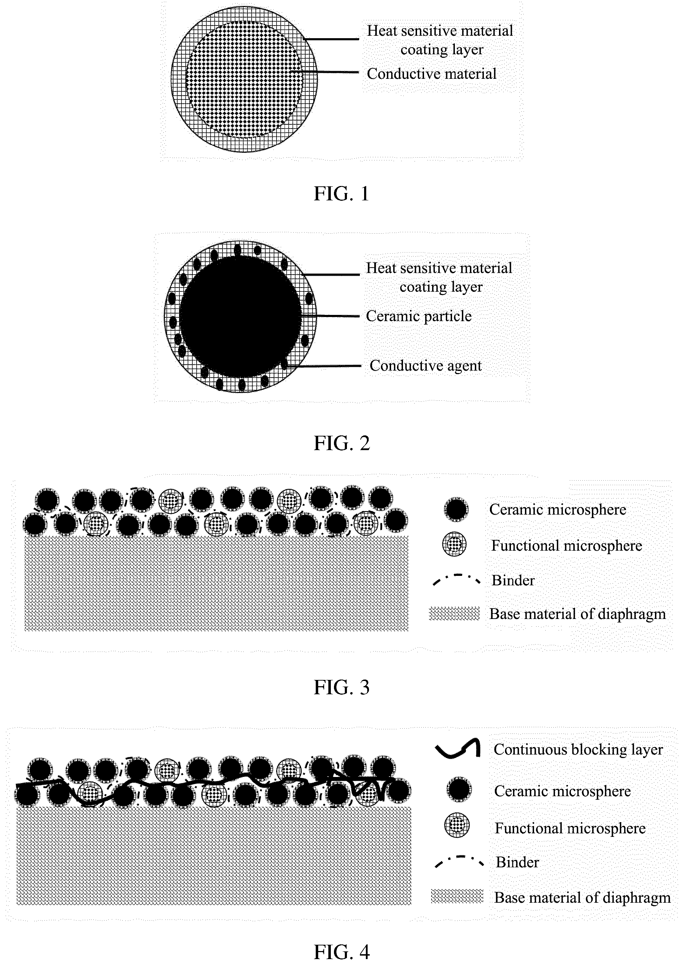

As mentioned above, the present invention provides a ceramic microsphere, and as shown in FIG. 2, the ceramic microsphere has a core-shell structure, namely, including a shell and a core, where a material for forming the shell includes a heat sensitive polymer and a conductive agent, and a material for forming the core includes a ceramic material.

The ceramic microsphere may be used in the field of lithium ion batteries, and may also be used in the fields of semiconductors, coatings, and primary or secondary batteries of other ion systems.

In a preferred embodiment of the present invention, in the ceramic microsphere, a mass ratio of the shell to the core is (0.2-1300): (50-80).

In a preferred embodiment of the present invention, in the ceramic microsphere, a mass ratio of the heat sensitive polymer to the conductive agent for forming the shell is (100-1000): (1-10).

In a preferred embodiment of the present invention, in the ceramic microsphere, a thickness of the shell is 1nm-5000nm, for example, 1nm, 10nm, 50nm, 100nm, 200nm, 500nm, 1000nm, 2000nm, 3000nm, 4000nm or 5000nm.

In a preferred embodiment of the present invention, an average particle diameter of the ceramic microsphere is 0.01 µm-20 µm, for example, 0.01 µm, 0.05 µm, 0.1 µm, 0.5 µm, 1 µm, 4 µm, 5 µm, 8 µm, 10 µm, 12 µm, 15 µm, 18 µm or 20 µm.

In a preferred embodiment of the present invention, the heat sensitive polymer is selected from a thermoplastic polymer which may form a relatively stable system with an electrolyte and have a phase transition property. A heat sensitive temperature range of the heat sensitive polymer is, for example, 100 °C-140 °C. Exemplarily, the heat sensitive polymer is selected from at least one of polyethylene, polypropylene, polyethylene terephthalate, polybutylene terephthalate, polystyrene, polyethylene naphthalate, polyimide, polyamide, aramid, polyparaphenylene series, etc. or their monomer modified and copolymerized polymers.

In a preferred embodiment of the present invention, a particle diameter of the ceramic material is 0.01 µm-20 µm, for example, 0.01 µm, 0.05 µm, 0.1 µm, 0.5 µm, 1 µm, 4 µm, 5 µm, 8 µm, 10 µm, 12 µm, 15 µm, 18 µm or 20 µm.

In a preferred embodiment of the present invention, the ceramic material is selected from at least one of silica, aluminum oxide, zirconium dioxide, magnesium hydroxide, boehmite, barium sulfate, fluorophlogopite, fluoroapatite, mullite, cordierite, aluminum titanate, titanium dioxide, copper oxide, zinc oxide, boron nitride, aluminum nitride, magnesium nitride, attapulgite and the like.

In a preferred embodiment of the present invention, the conductive agent is selected from at least one of conductive carbon black, Ketjen black, conductive fiber, acetylene black, carbon nanotube, graphene, flake graphite, conductive oxide, metal particle and the like.

In a preferred embodiment of the present invention, when the temperature of the ceramic microsphere reaches the heat sensitive range, the heat sensitive polymer on a surface of the ceramic microsphere melts, and the melted heat sensitive polymer between adjacent ceramic particles forms a continuous blocking layer for blocking, the blocking layer is mainly composed of the heat-sensitive polymer and the conductive agent, the blocking layer can block passages of lithium ions, but can still conduct electrons, so it can effectively improve safety of lithium ion batteries.

### [Preparation Method of Ceramic Microsphere]

As mentioned above, the present invention further provides a preparation method of the ceramic microsphere, the method includes the following steps:
coating a material for forming a shell, which includes a heat sensitive polymer and a conductive agent, onto a surface of a material for forming a core, which includes a ceramic material, by a liquid phase coating method or a solid phase coating method, so as to prepare the ceramic microsphere; where the ceramic microspheres have a core-shell structure, namely, including a shell and a core, the material for forming the shell includes the heat sensitive polymer and the conductive agent, the material for forming the core includes the ceramic material.

Exemplarily, in the case of using the liquid phase coating method, the liquid phase coating method includes the following steps:
dissolving the material for forming the shell into a solvent by stirring to form a solution containing the material for forming the shell; adding the material for forming the core into the above solution, and uniformly mixing them by stirring; removing the solvent in the mixed system by vacuum heating drying or spray drying, etc., so as to obtain the ceramic microsphere, where the ceramic microsphere has a core-shell structure, namely, including the shell and the core, and the material for forming the shell includes the heat sensitive polymer and the conductive agent, and the material for forming the core includes the ceramic material.

Where the solvent is selected from cresol, benzene, nitrobenzene, trichloroacetic acid, chlorophenol, toluene, xylene, tetrachloroethane, styrene, isopropane, chloroform, carbon tetrachloride and methyl ethyl ketone.

Exemplarily, in the case of using the solid phase coating method, the solid phase coating method includes the following steps:
performing solid phase coating of the material for forming the shell and the material for forming the core by stirring, ball milling and mechanical fusing, and then heating to a temperature in the heat sensitive range of the heat-sensitive polymer, so that the material for forming the shell forms a coating layer on the surface of the material for forming the core.

### [Conductive Microsphere]

As mentioned above, a conductive microsphere is further included in a mixed system of a coating layer of a diaphragm of the present invention. Specifically, as shown in FIG. 1, the conductive microsphere has a core-shell structure, namely, including a shell and a core. A material for forming the shell includes a heat sensitive polymer, and a material for forming the core includes a conductive material.

In a preferred embodiment of the present invention, in the conductive microsphere, a mass ratio of the shell to the core is (0.5-640): (50-80).

In a preferred embodiment of the present invention, in the conductive microsphere, a thickness of the shell is 1nm-2000nm, for example, 1nm, 10nm, 50nm, 100nm, 200nm, 500nm, 1000nm or 2000nm.

In a preferred embodiment of the present invention, an average particle diameter of the conductive microsphere is 0.01 µm-10 µm, for example, 0.01 µm, 0.05 µm, 0.1 µm, 0.5 µm, 1 µm, 4 µm, 5 µm, 8 µm or 10 µm.

In a preferred embodiment of the present invention, the heat sensitive polymer is selected from a thermoplastic polymer which may form a relatively stable system with an electrolyte and have a phase transition property. A heat sensitive temperature range of the heat sensitive polymer is, for example, 100 °C-140 °C. Exemplarily, the heat sensitive polymer is selected from at least one of polyethylene, polypropylene, polyethylene terephthalate, polybutylene terephthalate, polystyrene, polyethylene naphthalate, polyimide, polyamide, aramid, polyparaphenylene series, etc. or their monomer modified and copolymerized polymers.

In a preferred embodiment of the present invention, a particle diameter of the conductive material is 0.01 µm-8 µm, for example, 0.01 µm, 0.05 µm, 0.1 µm, 0.5 µm, 1 µm, 4 µm, 5 µm or 8 µm.

In a preferred embodiment of the present invention, the conductive material is an electron acceptor doped and/or undoped polymeric material, for example, an electron acceptor doped polymeric material, an electron acceptor undoped polymeric material, or a mixture of the electron acceptor doped polymeric material and the electron acceptor undoped polymeric material; and preferably an electron acceptor doped polymeric material or a mixture of the electron acceptor doped polymeric material and the electron acceptor undoped polymeric material.

Specifically, in the electron acceptor doped polymeric material, a mass content of an electron acceptor may be 20wt%-50wt%.

Where a method for doping is, for example, a gas phase doping, a liquid phase doping, an electrochemical doping, a photoinduced doping or an ion implantation.

Where the electron acceptor is selected from at least one of chlorine (Cl₂), bromine (Br₂), iodine (I₂), iodine chloride (ICl), iodine bromide (IBr), iodine trichloride (ICl₃), iodine pentafluoride (IF₅), phosphorus pentafluoride (PF₅), arsenic (As), antimony pentafluoride (SbF₅), boron trifluoride (BF₃), boron trichloride (BCl₃), boron tribromide (BBr₃), sulfur trioxide (SO3), hydrogen fluoride (HF), hydrogen chloride (HCl), nitric acid (HNO₃), sulfuric acid (H2SO4), perchloric acid (HClO₄), fluorosulfonic acid (FSO₃H), chlorosulfonic acid (ClSO₃H), perfluoromethane sulfonic acid (CF₃SO₃H), tantalum fluoride (TaFs), tungsten hexafluoride (WF₆), bismuth pentafluoride (BiFs), titanium tetrachloride (TiCl₄), zirconium tetrachloride (ZrCl₄), molybdenum pentachloride (MoCl₅), ferric trichloride (FeCl₃), silver chlorate (AgClO₃), silver tetrafluoroborate (AgBF₄), chloroiridic acid (H₂IrCl₆), lanthanum nitrate (La(NO₃)₃), cerium nitrate (Ce(NO₃)₃), tetracyanoethylene (TCNE), tetracyanoquinodimethane (TCNQ), tetrachloro-p-benzoquinone and dichlorodicyanobenzoquinone (DDQ), and the like.

Where the polymeric material is selected from at least one of polyacetylene, polyparaphenylene sulfide, polyparaphenylene, polyaniline, polypyrrole, polythiophene, pyrolysis polyacrylonitrile, pyrolysis polyvinyl alcohol, pyrolysis polyimide, polynaphthalene based polymers, polyethylene, polypropylene, polyvinyl chloride, polystyrene, epoxy resin, (meth)acrylate resin, unsaturated polyester, polyurethane, polyimide, silicone resin, butyl rubber, styrene-butadiene rubber, nitrile-butadiene rubber and natural rubber, and the like.

In a preferred embodiment of the present invention, when the temperature of the conductive microsphere reaches the heat sensitive range, the heat-sensitive polymer on a surface of the conductive microspheres melts and the internal conductive material is released. The internal conductive material has good conductivity and part of the conductive material can be dissolved in the electrolyte to form a chain-shaped conductive channel, in which electrons can continue to be conducted, that is, a micro-short circuit is formed inside the lithium-ion battery, which slows down a degree of thermal runaway of the lithium-ion battery.

### [Preparation Method of Conductive Microsphere]

The present invention further provides a preparation method of the above conductive microsphere, and the method includes the following steps:
coating the material for forming the shell, which includes the heat sensitive polymer, onto a surface of a material for forming the core, which includes the conductive material, by a liquid phase coating method or a solid phase coating method, so as to prepare the conductive microsphere; where the conductive microsphere has a core-shell structure, namely, including a shell and a core, the material for forming the shell includes the heat sensitive polymer, the material for forming the core includes the conductive material.

Exemplarily, in the case of using the liquid phase coating method, the liquid phase coating method includes the following steps:
dissolving the material for forming the shell into a solvent by stirring to form a solution containing the material for forming the shell; adding the material for forming the core into the above solution, and uniformly mixing them by stirring; removing the solvent in the mixed system by vacuum heating drying or spray drying, etc., so as to obtain the ceramic microsphere, where the conductive microsphere has a core-shell structure, namely, including a shell and a core, and the material for forming the shell includes the heat sensitive polymer, and the material for forming the core includes the conductive material.

Where the solvent is selected from at least one of cresol, benzene, butanone, nitrobenzene, trichloroacetic acid, chlorophenol, toluene, xylene, tetrachloroethane, styrene, isopropane, chloroform and carbon tetrachloride.

Exemplarily, in the case of using the solid phase coating method, the solid phase coating method includes the following steps:
performing solid-phase coating of the material for forming the shell and the material for forming the core by stirring, ball milling and mechanical fusing, and then heating them to a temperature in the heat sensitive range of the heat-sensitive polymer, so that the material for forming the shell forms a coating layer on the surface of the material for forming the core.

### [Diaphragm]

As mentioned above, the present invention further provides a diaphragm, and as shown in FIG. 3, the diaphragm includes a diaphragm base layer and a coating layer located on at least one surface of the diaphragm base layer, where the coating layer is obtained by coating the mixed system including the above conductive microsphere and the above ceramic microsphere onto at least one surface of the diaphragm base layer.

In a preferred embodiment of the present invention, a thickness of the coating layer is 1-10 µm, for example 2-5 µm, such as 1 µm, 2 µm, 3 µm, 4 µm, 5 µm, 6 µm, 7 µm, 8 µm, 9 µm or 10 µm, the coating layer with the above thickness may be obtained by one-time coating, and may also be obtained by multiple coating.

In a preferred embodiment of the present invention, if the diaphragm includes a diaphragm base layer and coating layers located on both surfaces of the diaphragm base layer, thicknesses of the coating layers on the both surfaces are the same or different.

In a preferred embodiment of the present invention, the mixed system further includes at least one of a polymer binder and an auxiliary agent. For example, the mixed system further includes a polymer binder and an auxiliary agent.

In a preferred embodiment of the present invention, parts by mass of components in the mixed system are as follows:
5-60 parts by mass of the conductive microsphere, 20-180 parts by mass of the ceramic microsphere, 0-20 parts by mass of the polymer binder and 0-10 parts by mass of the auxiliary agent.

For example, parts by mass of the components in the mixed system are as follows:
5-40 parts by mass of the conductive microsphere, 20-150 parts by mass of the ceramic microsphere, 1-20 parts by mass of the polymer binder and 1-10 parts by mass of auxiliary agent.

Exemplarily, parts by mass of the conductive microsphere are 5, 10, 15, 20, 25, 30, 35, 40, 45, 50, 55 or 60 parts by mass.

Exemplarily, parts by mass of the ceramic microsphere are 20, 25, 30, 35, 40, 45, 50, 55, 60, 70, 80, 90, 100, 110, 120, 130, 140, 150, 160, 170 or 180 parts by mass.

Exemplarily, parts by mass of the polymer binder are 1, 2, 3, 4, 5, 6, 7, 8, 9, 10, 12, 15, 18 or 20 parts by mass.

Exemplarily, parts by mass of the auxiliary agent are 1, 2, 3, 4, 5, 6, 7, 8, 9 or 10 parts by mass.

In a preferred embodiment of the present invention, the mixed system further includes 100-5000 parts by mass of solvent.

In a preferred embodiment of the present invention, the polymer binder is selected from one or more of polytetrafluoroethylene, polyvinylidene fluoride, polyvinylidene fluoride-hexafluoropropylene, polyimide, polyacrylonitrile, polymethyl(meth)acrylate, aramid resin, poly(meth)acrylic acid, styrene-butadiene rubber (SBR), polyvinyl alcohol, polyvinyl acetate, carboxymethyl cellulose (CMC), sodium carboxymethyl cellulose (CMC-Na), carboxyethyl cellulose, polyacrylamide, phenolic resin, epoxy resin, waterborne polyurethane, ethylene-vinyl acetate copolymer, polynary polyacrylic acid-based copolymer, lithium polystyrene sulfonate, waterborne silicone resin, butyronitrile-polyvinyl chloride blend, styrene-acrylic latex, pure benzene latex and the like and blends and copolymers derived from modifications of the aforementioned polymers.

In a preferred embodiment of the present invention, the auxiliary agent is selected from at least one of polybranched alcohol, triethyl phosphate, polyethylene glycol, fluorinated polyethylene oxide, polyethylene oxide, stearic acid, sodium dodecyl benzene sulfonate, sodium cetyl sulfonate, fatty acid glyceride, sorbitan fatty acid ester and polysorbate.

In a preferred embodiment of the present invention, the solvent is selected from at least one of water, methanol, ethanol, acetone, N-methyl-2-pyrrolidone (NMP), chloroform, xylene, tetrahydrofuran, o-chlorobenzaldehyde, hexafluoroisopropanol, N, N-dimethylformamide, butanone and acetonitrile.

### [Preparation Method of Diaphragm]

The present invention further provides a preparation method of the above diaphragm, where the method includes the following steps:
(a) adding the above conductive microsphere, the above ceramic microsphere, optionally the polymer binder and optionally the auxiliary agent to a solvent, and mixing them to obtain a mixed slurry; and
(b) coating the mixed slurry of step (a) onto a surface of a diaphragm base layer, and drying them to obtain the diaphragm.

In a preferred embodiment of the present invention, in step (a), in the mixed slurry, parts by mass of the above conductive microsphere, the above ceramic microsphere, optionally the polymer binder, optionally the auxiliary agent and the solvent are as follows:
5-60 parts by mass of the above conductive microsphere, 20-180 parts by mass of the above ceramic microsphere, 0-20 parts by mass of the polymer binder, 0-10 parts by mass of the auxiliary agent and 100-5000 parts by mass of the solvent.

For example, parts by mass of components in the mixed system are as follows:
5-40 parts by mass of the above conductive microsphere, 20-150 parts by mass of the ceramic microsphere, 1-20 parts by mass of the polymer binder, 1-10 parts by mass of the auxiliary agent and 100-5000 parts by mass of the solvent.

In a preferred embodiment of the present invention, in step (b), a method for coating is for example spray coating, dip coating, gravure printing, extrusion coating, transfer coating, etc.

In a preferred embodiment of the present invention, in step (b), the diaphragm base layer has a porosity of 20%-80%, a thickness of 5 µm-50 µm, and an aperture diameter D < 80 nm; a material system of the diaphragm base layer is selected from at least one of polyethylene, polypropylene, polyethylene terephthalate, polybutylene terephthalate, polystyrene, polynaphthalene-based polymer, polyimide, polyamide, aramid and polyparaphenylene benzodiazole, etc.

In a preferred embodiment of the present invention, the diaphragm has a performance of heat sensitively blocking lithium ion conduction and heat sensitive electron conduction when the temperature reaches a heat sensitive range of 100 °C-140 °C. As shown in FIG. 4, it is mainly because the diaphragm contains two kinds of microspheres, and when the diaphragm reaches the heat sensitive range, the heat sensitive polymer on the surface begins to melt, forms a blocking layer between ceramic particles to continuously block lithium ion conduction and to block positive and negative electrodes from continuing to thermal runaway; meanwhile the heat sensitive polymer of the heat sensitive coating layer melts and releases internal conductive material, the conductive material can enter apertures of the diaphragm and part of the conductive material can be dissolved in the electrolyte to form an electron conduction diaphragm, so as to form an internal micro short circuit to improve battery safety.

### [Lithium Ion Battery]

As mentioned above, the present invention further provides a lithium ion battery, the lithium ion battery includes the above diaphragm.

In a preferred embodiment of the present invention, when the lithium ion battery is in a thermal runaway or at a heat sensitive temperature, a micro short circuit is internally formed, safety of the lithium ion battery is higher than that of a conventional lithium ion battery.

The preparation method of the present invention will be further described in detail below in conjunction with the specific examples. It should be understood that the following examples only exemplarily illustrate and explain the present invention, and should not be interpreted as a limit to a protection scope of the present invention. Any technology realized based on the above contents of the present invention is covered within the intended protection scope of the present invention.

The experimental methods used in the following examples are conventional methods unless otherwise specified; reagents and materials etc. used in the following examples may be commercially available unless otherwise specified.

### Example 1

0.5 g of polyethylene terephthalate was dissolved in cresol by stirring to form a mixed solution, 50 g of pyrolysis polyvinyl alcohol doped with 20 wt.% of perfluoromethanesulfonic acid (CF3SO3H) was added, and after uniformly mixing by stirring, microspheres in which the heat sensitive polymer coats the conductive material were obtained by removing the solvent in the mixture via a spray drying technology.

In the prepared conductive microspheres, the shell is polyethylene terephthalate, and the core is a pyrolysis polyvinyl alcohol doped with 20 wt.% perfluoromethanesulfonic acid (CF₃SO₃H); a mass ratio of the shell to the core is 0.5: 50, a thickness of the shell is 1 nm, and an average particle diameter of the microspheres is about 0.01 µm.

0.2 g of polyethylene terephthalate and conductive carbon black (where a mass ratio of the heat sensitive polymer to the conductive carbon black is 100: 1) were dissolved in cresol by stirring to form a mixed solution, 50g of boehmite is added, and after uniformly mixing by stirring, microspheres in which the heat sensitive polymer and the conductive agent coat the ceramic were obtained by removing the solvent in the mixture via a spray drying technology.

In the prepared ceramic microspheres, the shell is polyethylene terephthalate and the conductive carbon black, and the core is boehmite; a mass ratio of the shell to the core is 0.2: 50, a thickness of the shell is 1 nm, and an average particle diameter of the microspheres is about 0.01 µm.

10 g of conductive microspheres prepared above, 180 g of the ceramic microspheres prepared above, 1 g of polyvinylidene fluoride-hexafluoropropylene and 1 g of polyethylene glycol were added in 100g of acetone, and uniformly mixed to obtain a mixed slurry, the mixed slurry was sprayed on the surface of the diaphragm base layer, and dried to obtain a diaphragm, and a thickness of the coating layer on the surface of the diaphragm is 1 µm.

The above diaphragm, a positive electrode and a negative electrode were laminated or wound to prepare a lithium ion battery cell, and after baking, liquid injection, formation, and encapsulation, a high-safety lithium ion battery was obtained.

### Example 2

200 g of polystyrene was dissolved in benzene by stirring to form a mixed solution, 60g of polyacetylene doped with 30wt% tungsten hexafluoride (WF6) was added, and after uniformly mixing by stirring, microspheres in which the heat sensitive polymer coats the conductive material were obtained by removing the solvent in the mixture via a spray drying technology.

In the prepared conductive microspheres, the shell is polystyrene, and the core is polyacetylene doped with 30 wt% of tungsten hexafluoride (WF6); a mass ratio of the shell to the core is 200: 60, a thickness of the shell is 400 nm, and an average particle diameter of the microspheres is about 10 µm.

0.32 g of polystyrene and Ketjen black as conductive agent (where a mass ratio of the heat sensitive polymer: Ketjen black as conductive agent =1000: 1) were dissolved in benzene by stirring to form a mixed solution, 80 g of zirconium dioxide was added, and uniformly mixing by stirring, microspheres in which the heat sensitive polymer and the conductive agent coats the ceramic were obtained by removing the solvent in the mixture via a spray drying technology.

In the prepared ceramic microspheres, the shell is polystyrene and Ketjen black as conductive agent, and the core is zirconium dioxide; a mass ratio of the shell to the core is 0.32: 80, and a thickness of the shell is 1 nm, and an average particle diameter of the microspheres is about 10 µm.

60 g of the conductive microspheres prepared above, 80 g of the ceramic microspheres prepared above, 20 g of polyvinylidene fluoride and 10 g of sodium hexadecyl sulfonate were added to 5000 g of N-methyl-2-pyrrolidone, and uniformly mixed to obtain a mixed slurry, the mixed slurry was dip-coated on a surface of the diaphragm base layer, and dried to obtain a diaphragm, and a thickness of the coating layer on the surface of the diaphragm is 10 µm.

The above diaphragm, a positive electrode and a negative electrode were laminated or wound to prepare a lithium ion battery cell, an after baking, liquid injection, formation, and encapsulation, a high-safety lithium ion battery was obtained.

### Example 3

240 g of polyethylene, 400 g of polypropylene and 40 g of polypyrrole doped with 50 wt.% tetrachloro-p-benzoquinone and 40 g of polyaniline were subjected to a solid phase coating by ball milling, and then heated to a temperature in the heat sensitive range of the heat sensitive polymer, so that the heat sensitive polymer forms a heat sensitive polymer coating layer on the surface of the conductive material to obtain microspheres in which the heat sensitive polymer coats the conductive material.

In the prepared conductive microspheres, the shell is polyethylene and polypropylene, and the core is polypyrrole and polyaniline doped with 50 wt.% tetrachloro-p-benzoquinone; a mass ratio of the shell to the core is 640: 80, a thickness of the shell is 2000 nm, and an average particle diameter of the microspheres is about 10 µm.

12g of polystyrene and a conductive fiber (where a mass ratio of the heat sensitive polymer: the conductive fiber = 10: 1) and 60 g of boehmite were subjected to a solid phase coating by ball milling, and then heated to a temperature in the heat sensitive range of the heat sensitive polymer, so that the heat sensitive polymer and the conductive agent form a coating layer of the heat sensitive polymer and the conductive agent on the surface of the ceramic material, to obtain the microspheres in which the heat sensitive polymer and the conductive agent coat the ceramic material.

In the prepared ceramic microspheres, the shell is polystyrene and the conductive fiber, and the core is boehmite; a mass ratio of the shell to the core is 12: 60, a thickness of the shell is 50 nm, and an average particle diameter of the microspheres is about 6 µm.

50 g of the conductive microspheres prepared above, 20 g of the ceramic microspheres prepared above, 2 g of polyvinylidene fluoride-hexafluoropropylene, 1g polymethyl methacrylate and 9 g of polyethylene oxide were added into 2000 g of acetone, and were uniformly mixed to obtain a mixed slurry, the mixed slurry was gravure printed on the surface of the diaphragm base layer, and was dried to obtain a diaphragm, and a thickness of the coating layer on the surface of the diaphragm is 10µm.

The above diaphragm, a positive electrode and a negative electrode were laminated or wound to prepare a lithium ion battery cell, and after baking, liquid injection, formation, and encapsulation, a high-safety lithium ion battery was obtained.

### Example 4

33.6 g of polyethylene naphthalate and 70 g of polyparaphenylene sulfide doped with 35 wt.% boron tribromide (BBr₃) were subjected to a solid phase coating by ball milling, and then heated to a temperature in the heat sensitive range of the heat sensitive polymer, so that the heat sensitive polymer forms a heat sensitive polymer coating layer on the surface of the conductive material, to obtain microspheres in which the heat sensitive polymer coats the conductive material.

In the prepared conductive microspheres, the shell is polyethylene naphthalate, and the core is the polyparaphenylene sulfide doped with 35 wt.% boron tribromide (BBr₃); a mass ratio of the shell to the core is 33.6: 70, a thickness of the shell is 100 nm, and an average particle diameter of the microspheres is about 5 µm.

1300 g of polyethylene naphthalate and acetylene black as conductive agent (where a mass ratio of the heat sensitive polymer : acetylene black as conductive agent = 100: 1) and 65 g of boehmite and fluorophlogopite (where a mass ration of boehmite: fluorophlogopite = 11: 1) were subjected to a solid phase coating, and then heated to a temperature in the heat sensitive range of the heat sensitive polymer, so that the heat sensitive polymer and the conductive agent form a coating layer of the heat sensitive polymer and the conductive agent on the surface of the ceramic material, to obtain microspheres in which the heat sensitive polymer and the conductive agent coat the ceramic material.

In the prepared ceramic microspheres, the shell is polyethylene naphthalate and acetylene black as conductive agent, and the core is boehmite and fluorophlogopite; a mass ratio of the shell to the core is 1300: 65, and a thickness of the shell is 5000 nm, and an average particle diameter of the microspheres is about 20µm.

30 g of the conductive microspheres prepared above, 55 g of the ceramic microspheres prepared above, 5 g of styrene-butadiene rubber (SBR) and 5 g of sodium carboxymethyl cellulose (CMC-Na) and 2 g of sodium hexadecyl sulfonate were added into 500 g of water, and uniformly mixed to obtain a mixed slurry, the mixed slurry was extruded and coated onto the surface of the diaphragm base layer, and dried to obtain a diaphragm, and a thickness of the coating layer on the surface of the diaphragm is 10 µm.

The above diaphragm, a positive electrode, and a negative electrode were laminated or wound to prepare a lithium ion battery cell, and after baking, liquid injection, formation, and encapsulation, a high-safety lithium ion battery was obtained.

### Example 5

52 g of polystyrene was dissolved in toluene by stirring to form a mixed solution, 65 g of polypyrrole doped with 40 wt.% titanium tetrachloride (TiCl₄) was added, and after mixing uniformly by stirring, microspheres in which the heat sensitive polymer coats the conductive material were obtained by removing the solvent in the mixture by a heating and drying technology.

In the prepared conductive microspheres, the shell is polystyrene, and the core is polypyrrole doped with 40 wt.% titanium tetrachloride (TiCl₄); a mass ratio of the shell to the core is 52: 65, a thickness of the shell is 200 nm, and an average particle diameter of the microspheres is about 8µm

280 g of polystyrene and carbon nanotube as conductive agent (where a mass ratio of the heat sensitive polymer: carbon nanotube as conductive agent = 250: 1) were dissolved in toluene by stirring to form a mixed solution, and 70 g of silica and fluorapatite (where a mass ratio of silica: fluorapatite = 3: 1) were added, and after mixing uniformly by stirring, microspheres in which the heat sensitive polymer and the conductive agent coat the ceramic material were obtained by removing the solvent in the mixture by a heating and drying technology.

In the prepared ceramic microspheres, the shell is polystyrene and carbon nanotube as conductive agent, the core is silica and fluorapatite, a mass ratio of the shell to the core is 280: 70, a thickness of the shell is 1000 nm, and an average particle diameter of the microspheres is about 4µm.

60 g of the conductive microspheres prepared above, 30 g of the ceramic microspheres prepared above, 3 g of polyacrylonitrile, 2 g of polyimide and 8 g of polyethylene glycol were added into 1000 g of N-methyl-2-pyrrolidone (NMP), and uniformly mixed to obtain a mixed slurry, the mixed slurry was transfer-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Example 6

300 g of polyimide and 75 g of polythiophene doped with 25 wt.% lanthanum nitrate (La(NO₃)₃) were subjected to a solid phase coating by mechanical stirring, and then heated to a temperature in the heat sensitive range of the heat sensitive polymer, so that the heat sensitive polymer forms the heat sensitive polymer coating layer on the surface of the conductive material to obtain microspheres in which the heat sensitive polymer coats the conductive material.

In the prepared microspheres, the shell is polyimide, and the core is the polythiophene doped with 25 wt.% lanthanum nitrate (La(NO₃)₃); a mass ratio of the shell to the core is 300 : 75, a thickness of the shell is 1000 nm, and an average particle diameter of the microspheres is about 5µm.

240 g of polyimide and graphene as conductive agent (where a mass ratio of the heat sensitive polymer: graphene = 200: 5) and 60 g of silica, aluminum oxide and boehmite (where a mass ration of silica: aluminum oxide: boehmite = 3: 1: 1) were subjected to a solid phase coating by mechanical stirring, and then heated to a temperature in the heat sensitive range of the heat sensitive polymer, so that the heat sensitive polymer and the conductive agent form the coating layer of the heat sensitive polymer and the conductive agent on the surface of the ceramic material, to obtain microspheres in which the heat sensitive polymer and the conductive agent coat the ceramic material.

In the prepared ceramic microspheres, the shell is polyimide and graphene as conductive agent, the core is silica, aluminum oxide and boehmite; a mass ratio of the shell to the core is 240: 60, a thickness of the shell is 1000 nm, and an average particle diameter of the microspheres is about 5µm.

40 g of the conductive microspheres prepared above, 50 g of the ceramic microspheres prepared above, 10 g of polyvinylidene fluoride-hexafluoropropylene, 8 g of polyvinyl acetate and 4 g of triethyl phosphate were added into 1500 g of acetone, and mixed uniformly to obtain a mixed slurry, and the mixed slurry was sprayed on the surface of the diaphragm base layer, and dried to obtain a diaphragm. A thickness of the coating layer on the surface of the diaphragm is 5µm.

The above diaphragm, a positive electrode and a negative electrode were laminated or wound to prepare a lithium ion battery cell, and after baking, liquid injection, formation, and encapsulation, a high-safety lithium ion battery was obtained.

### Example 7

120 g of polystyrene was dissolved in butanone by stirring to form a mixed solution, 60g of polythiophene doped with 30 wt.% silver tetrafluoroborate (AgBF4) was added, and after mixing uniformly by stirring, microspheres in which the heat sensitive polymer material coats the conductive material were obtained by removing the solvent in the mixture via a spray drying technology.

In the prepared conductive microspheres, the shell is polystyrene, and the core is polythiophene doped with 30 wt.% silver tetrafluoroborate (AgBF4); a mass ratio of the shell to the core is 120: 60, a thickness of the shell is 500 nm, and an average particle diameter of the microspheres is about 4µm.

192 g of polystyrene and carbon nanotube as conductive agent (where a mass ratio of the heat sensitive polymer: carbon nanotube = 600: 4) were dissolved in butanone by stirring to form a mixed solution, and 60 g of aluminum oxide was added, and after mixing uniformly by stirring, microspheres in which the heat sensitive polymer and the conductive agent coat the ceramic material were obtained by removing the solvent in the mixture via a spray drying technology.

In the prepared ceramic microspheres, the shell is polystyrene and carbon nanotube as conductive agent, and the core is aluminum oxide; a mass ratio of the shell to the core is 192: 60, a thickness of the shell is 800 nm, and an average particle diameter of the microspheres is about 8µm.

20 g of the conductive microspheres prepared above, 70 g of the ceramic microspheres prepared above, 15 g of polyvinylidene fluoride-hexafluoropropylene and 6 g of polyethylene glycol were added to 4000 g of acetone, and uniformly mixed to obtain a mixed slurry, the mixed slurry was dip-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Comparative Example 1

The ceramic microspheres were prepared using the same preparation method as in Example 7.

70 g of the ceramic microspheres prepared above, 15 g of polyvinylidene fluoride-hexafluoropropylene and 6 g of polyethylene glycol were added into 4000 g of acetone, and uniformly mixed to obtain a mixed slurry, the mixed slurry was dip-coated on the surface of the diaphragm base layer, and dried to obtain a diaphragm, and a thickness of the coating layer is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Comparative Example 2

13.3 g of polystyrene, 6.7 g of polythiophene doped with 30 wt.% of silver tetrafluoroborate (AgBF4), 15 g of polyvinylidene fluoride-hexafluoropropylene and 6 g of polyethylene glycol were added into 4000 g of acetone, and uniformly mixed to obtain a mixed slurry, and the mixed slurry was dip-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Comparative Example 3

53.3 g of polystyrene and carbon nanotube as conductive agent (where a mass ratio of the heat sensitive polymer: carbon nanotube = 600: 4), 16.7 g of aluminum oxide, 15 g of polyvinylidene fluoride-hexafluoropropylene and 6 g of polyethylene glycol were added to 4000 g of acetone, uniformly mixed to obtain a mixed slurry, the mixed slurry was dip-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Comparative Example 4

90g of polystyrene was dissolved in butanone by stirring to form a mixed solution, 3 g of polythiophene doped with 30 wt.% of silver tetrafluoroborate (AgBF4) was added, and after mixing uniformly by stirring, microspheres in which the heat sensitive polymer material coats the conductive material were obtained by removing the solvent in the mixture via a spray drying technology.

In the prepared conductive microspheres, the shell is polystyrene, and the core is polythiophene doped with 30 wt.% of silver tetrafluoroborate (AgBF4); a mass ratio of the shell to the core is 90: 3, a thickness of the shell is 500 nm, and an average particle diameter of the microspheres is about 4µm.

20 g of the conductive microspheres prepared above, 16.7 g of aluminum oxide, 15 g of polyvinylidene fluoride-hexafluoropropylene and 6 g of polyethylene glycol were added to 4000 g of acetone, and uniformly mixed to obtain a mixed slurry, the mixed slurry was dip-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Comparative Example 5

13.3 g of polystyrene, 0.67 g of polythiophene doped with 30 wt.% of silver tetrafluoroborate (AgBF4), 53.3 g of polystyrene and carbon nanotube as conductive agent (where a mass ratio of the heat sensitive polymer: carbon nanotube = 600: 4), 16.7 g of aluminum oxide, 15 g of polyvinylidene fluoride-hexafluoropropylene and 6 g of polyethylene glycol were added to 4000 g of acetone, and mixed uniformly to obtain a mixed slurry, the mixed slurry was dip-coated on the surface of the diaphragm base layer, and dried to obtain a diaphragm, and a thickness of the coating layer on the surface of the diaphragm is 8 µm.

The above diaphragm, a positive electrode and a negative electrode were laminated or wound to prepare a lithium ion battery cell, and after baking, liquid injection, formation, and encapsulation, a high-safety lithium ion battery was obtained.

### Test Example 1

The lithium ion batteries prepared in Examples 1-7 and Comparative Examples 1-5 were subjected to a full-charge voltage test and an internal resistance test at room temperature, and a process of the test is: fully charging the lithium ion batteries prepared in Examples 1-7 and Comparative Examples 1-5, putting them in an environment of 25 °C and 50 % humidity, and testing voltages and internal resistances of the batteries in a full-charge state using a voltage and internal resistance meter (Anber-Applent, Model AT526B). The results are shown in Table 1.

**Table 1 Results of voltage test and internal resistance test of lithium ion batteries of Examples 1-7 and Comparative Examples 1-5**

| Sample Number | Sample Information of Diaphragm | Base Material Information of Diaphragm | Average Voltage of Lithium Battery | Internal Resistance of Lithium Ion Battery |
|---|---|---|---|---|
| Example 1 | Single-coated | Base material: polyethylene; porosity: 60 %; aperture diameter: 80 nm | 4.2009 V | 11.28 mΩ |
| Example 2 | Double-coated | Base material: polypropylene; porosity: 40 %; aperture diameter: 70 nm | 4.2013 V | 11.91 mΩ |
| Example 3 | Single-coated | Base material: polyamide; porosity: 80 %; aperture diameter: 40 nm | 4.2012 V | 11.46 mΩ |
| Example 4 | Single-coated | Base material: aramid; porosity: 25 %; aperture diameter: 45 nm | 4.2010 V | 11.52 mΩ |
| Example 5 | Double-coated | Base material: polypropylene; porosity: 55 %; aperture diameter: 50 nm | 4.2014 V | 11.94 mΩ |
| Example 6 | Single-coated | Base material: polyethylene; porosity: 45 %; aperture diameter: 45 nm | 4.2011 V | 11.43 mΩ |
| Example 7 | Single-coated | Base material: polyethylene; porosity: 55 %; aperture diameter: 50 nm | 4.2015 V | 11.36 mΩ |
| Comparative Example 1 | Single-coated | Base material: polyethylene; porosity: 55 %; aperture diameter: 50 nm | 4.2012 V | 11.23 mΩ |
| Comparative Example 2 | Single-coated | Base material: polyethylene; porosity: 55 %; aperture diameter: 50 nm | Low voltage or zero voltage phenomenon | 0.62 mΩ |
| Comparative Example 3 | Single-coated | Base material: polyethylene; porosity: 55 %; aperture diameter: 50 nm | 4.2018 V | 11.35 mΩ |
| Comparative Example 4 | Single-coated | Base material: polyethylene; porosity: 55 %; aperture diameter: 50 nm | 4.2013 V | 11.45 mΩ |
| Comparative Example 5 | Single-coated | Base material: polyethylene; porosity: 55 %; aperture diameter: 50 nm | Low voltage or zero voltage phenomenon | 0.71 mΩ |

In Examples 1-7, the conductive microspheres and the ceramic microspheres in which the heat sensitive polymer coats the conductive material are applied to the diaphragms, and assembled into the lithium ion batteries. From data in Table 1, the lithium ion batteries prepared in Examples 1-7, Comparative Example 1 and Comparative Example 3-4 have normal voltages after sorting, and the data shows that the addition of the conductive microspheres and the ceramic particles does not affect the full-charged average voltages and the internal resistances of the lithium ion batteries; the lithium ion batteries prepared in Comparative Example 2 and Comparative Example 5 have a low voltage or zero voltage phenomenon after sorting, which is mainly due to that the conductive materials are directly added to the coating layers of the diaphragm in Comparative Example 2 and Comparative Example 5, resulting in a micro short circuit inside the cells.

### Test Example 2

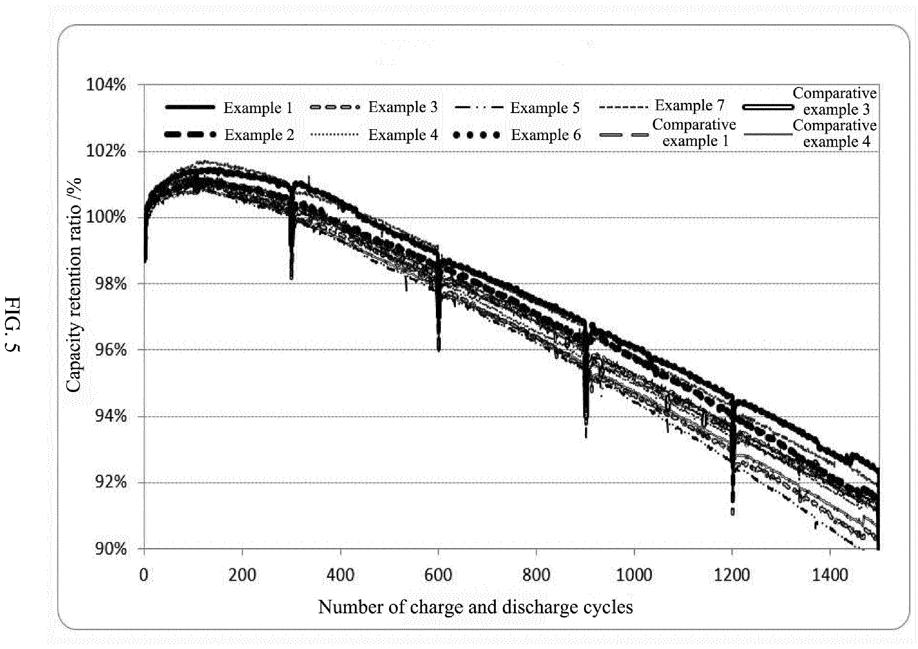

The lithium ion batteries prepared in Examples 1-7, Comparative Example 1 and Comparative Examples 3-4 were subjected to a charge and discharge cycle test, the results are as shown in FIG. 5, the test conditions are 25 °C, 50 % humidity, and charging and discharging at 1C/1C.

By comparing experimental results of Examples 1-7, Comparative Example 1 and Comparative Example 3-4, the following conclusions are drawn:
1. Simply blending the heat sensitive polymer with the conductive material, and applying them to the diaphragms of the lithium ion batteries will cause the conductive material to form a micro short circuit inside the lithium ion batteries, resulting a low voltage or zero voltage phenomenon of the lithium ion batteries, and normal charge and discharge cannot be performed; and
2. In Examples 1-7, the conductive microspheres and the ceramic microspheres coated with the heat sensitive polymer and applied in the diaphragms of the lithium ion batteries do not affect the internal resistances of the lithium ion batteries, the voltages of the lithium ion batteries, and the charge and discharge cycles of the lithium ion batteries, and meet application needs.

### Test Example 3

The lithium ion batteries prepared in Examples 1-7 and Comparative Examples 1-5 were subjected to a conductivity test, and a process of the test is: after treating the diaphragms prepared in Examples 1-7 and Comparative Examples 1-2 at temperatures of 90 °C, 120 °C and 140 °C for 10 minutes, dropwise adding the electrolyte to test electronic conductivity of the diaphragms; and after the lithium ion batteries prepared in Examples 1-7 and Comparative Examples 1-5 were treated at the temperatures of 90 °C, 120 °C and 140 °C for 10 minutes, they are left to room temperature, and then the internal resistances of the lithium ion batteries were tested by a voltage and internal resistance meter, and the results shown in Table 2 below were obtained.

**Table 2 Test Results of High Temperature Conductivity of Lithium Ion Batteries Prepared In Examples 1-7 and Comparative Examples 1-5**

| Sample Number | Conductivity of Diaphragm Treated at 90 °C | Internal Resistance of Battery Treated At 90 °C | Conductivity of Diaphragm Treated at 120 °C | Internal Resistance of Battery Treated At 120 °C | Conductivity of Diaphragm Treated at 140 °C | Internal Resistance of Battery Treated At 140 °C |
|---|---|---|---|---|---|---|
| Example 1 | Non-conductive | 12.35 mΩ | Non-conductive | 14.46 mΩ | Conductive | 0.42 mΩ |
| Example 2 | Non-conductive | 12.16 mΩ | Conductive | 0.86 mΩ | Conductive | 0.47 mΩ |
| Example 3 | Non-conductive | 12.32 mΩ | Non-conductive | 14.78 mΩ | Conductive | 0.58 mΩ |
| Example 4 | Non-conductive | 12.84 mΩ | Conductive | 0.91 mΩ | Conductive | 0.64 mΩ |
| Example 5 | Non-conductive | 12.68 mΩ | Conductive | 0.72 mΩ | Conductive | 0.52 mΩ |
| Example 6 | Non-conductive | 12.57 mΩ | Non-conductive | 15.12 mΩ | Conductive | 0.65 mΩ |
| Example 7 | Non-conductive | 12.36 mΩ | Conductive | 0.86 mΩ | Conductive | 0.66 mΩ |
| Comparative Example 1 | Non-conductive | 12.23 mΩ | Non-conductive | 4038.46Ω | Non-conductive | 4538.46Ω |
| Comparative Example 2 | Conductive | 0.98 mΩ | Conductive | 0.89 mΩ | Conductive | 0.56 mΩ |
| Comparative Example 3 | Non-conductive | 12.33 mΩ | Non-conductive | 14.98 mΩ | Non-conductive | 16.48 mΩ |
| Comparative Example 4 | Non-conductive | 12.63 mΩ | Conductive | 0.68 mΩ | Conductive | 0.48 mΩ |
| Comparative Example 5 | Conductive | 0.94 mΩ | Conductive | 0.83 mΩ | Conductive | 0.66 mΩ |

From data in above Table 2, by comparing the experimental results of Examples 1-7 and Comparative Examples 1-5, the following conclusions are drawn:
1. heat sensitive ranges of the heat sensitive polymers are 100 °C-140 °C, the heat sensitive ranges of Examples 2, 4, 5 and 7 are 100 °C-120 °C, and the heat sensitive ranges of Examples 1, 3 and 6 are 120 °C-140 °C;
2. the heat sensitive polymer can effectively coat the conductive microsphere and the ceramic microsphere, which are applied to the lithium ion batteries, and meet requirements of specific application indicators;
3. directly blending the heat sensitive polymer with the conductive material and applying them to the lithium ion batteries will cause an internal micro short circuit phenomenon; and
4. Comparative Example 1 contains the ceramic microspheres coated with the heat sensitive polymer, can effectively block the lithium ions and electrons from passing through; Comparative Examples 1-7 contain the conductive microspheres and the ceramic microspheres, both of which are coated with the heat sensitive polymer, and when in the heat sensitive range, the microspheres coated with the heat sensitive polymer can effectively block the lithium ions from passing through, the conductive agent on the surface of the ceramic microspheres can conduct electrons, and the lithium ion batteries containing the diaphragms in Examples 1-7 have good safety and can well control or slow down the occurrence of thermal runaway.

### Test Example 4

The lithium ion batteries prepared in Examples 1-7, Comparative Example 1, Comparative Examples 3-4 were subjected to puncturing and squeezing tests, and a process of the tests is: treating fully charged cells obtained by charging and discharging the lithium ion batteries at 140 °C for 10 min, and then cooling them to room temperature, and performing puncturing, squeezing and dropping tests, and observing conditions of the batteries. The results are shown in Table 3.

**Table 3 Test Results of Puncturing and Squeezing Lithium Ion Batteries in Examples 1-7, Comparative Example 1 And Comparative Examples 3-4**

| Sample Number | Puncturing | Squeezing | Dropping |
|---|---|---|---|
| Example 1 | Passing (passing rate 99 %) | Passing (passing rate 97 %) | Passing (passing rate 99 %) |
| Example 2 | Passing (passing rate 96 %) | Passing (passing rate 98 %) | Passing (passing rate 98 %) |
| Example 3 | Passing (passing rate 97 %) | Passing (passing rate 99 %) | Passing (passing rate 99 %) |
| Example 4 | Passing (passing rate 99 %) | Passing (passing rate 99 %) | Passing (passing rate 98 %) |
| Example 5 | Passing (passing rate 98 %) | Passing (passing rate 98 %) | Passing (passing rate 99 %) |
| Example 6 | Passing (passing rate 99 %) | Passing (passing rate 97 %) | Passing (passing rate 98 %) |
| Example 7 | Passing (passing rate 99 %) | Passing (passing rate 99 %) | Passing (passing rate 99 %) |
| Comparative Example 1 | Passing (passing rate 70 %) | Passing (passing rate 60 %) | Passing (passing rate 72 %) |
| Comparative Example 3 | Thermal runaway and firing | Thermal runaway and firing | Not passing |
| Comparative Example 4 | Passing (passing rate 55 %) | Passing (passing rate 62 %) | Passing (passing rate 75 %) |

From data in the above Table 3, the results show that:
1. under the condition, Examples 1-7 can pass the puncturing, squeezing and dropping safety tests of the lithium batteries, which effectively improves safety performance of the lithium ion batteries;
2. the passing rates of Comparative Example 1 and Comparative Example 4 are not high, and although they can improve the safety, but the improvement is limited;
3. Comparative Example 3 cannot pass the puncturing, squeezing and dropping tests, and the safety of the lithium ion battery is poor.

Based on the above test data, the following conclusion is drawn: when the conductive microspheres and the ceramic microspheres are coated with the heat sensitive polymer and are applied to the diaphragm, the safety of the lithium ion batteries can be effectively improved.

### Test Example 5

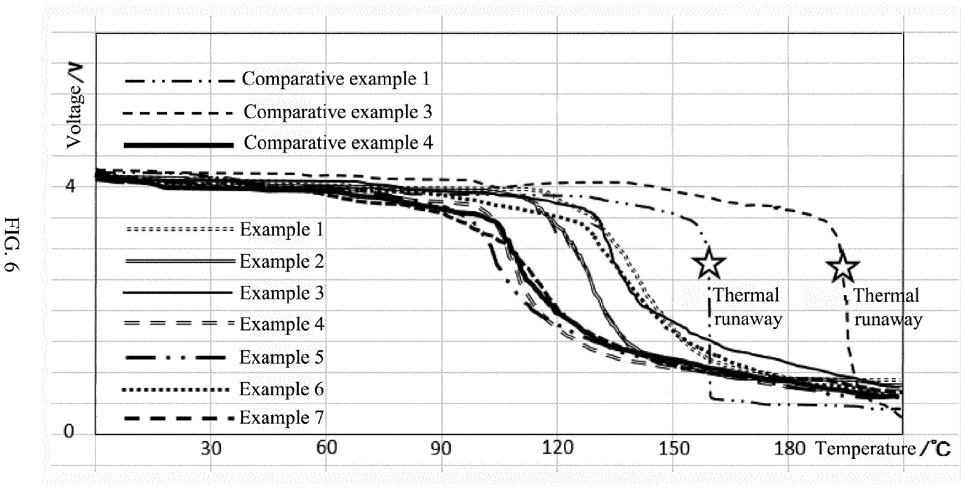

The lithium ion batteries prepared in Examples 1-7, Comparative Example 1 and Comparative Example 3-4 were subjected to a dynamic voltage test, and a process of the test is: increasing temperatures of fully charged cells of the lithium ion batteries after charging and discharging at a heating rate of 2 °C/min, and continuously testing voltages of batteries and states of the batteries, as shown in FIG. 6.

As can be seen from FIG. 6, comparison of test results of Examples 1-7, Comparative Example 1 and Comparative Example 3-4 is as below:
1. for the fully charged battery of Comparative Example 1, as the temperature rises, voltage of the battery drops, and in Comparative Example 1, the battery undergoes a thermal runaway, fire and explosion at about 160 °C, which is mainly due to the thermal runaway of the lithium ion battery as the temperature increases;
2. the heat sensitive temperature range of heat sensitive microspheres in Example 1, 3 and 6 is 120 °C-140 °C, the heat sensitive temperature range of heat sensitive microspheres in Examples 2, 4, 5 and 7 is 100 °C-120 °C, and when the conductive microspheres and the ceramic microspheres coated with the heat sensitive polymer reach the heat sensitive ranges, the heat sensitive polymer on the surface begins to melt and microspheres rupture, resulting in that electronic short circuit is formed inside the battery and the lithium ions are blocked from passing through, thereby dropping the battery voltage and slowing down the thermal runaway of the batteries;
3. comparing Comparative Example 1 with Comparative Example 3, Comparative Example 3 uses the heat sensitive polymer to coat the ceramic microspheres, and when the temperature reaches the heat sensitive range, the heat sensitive polymer on the surface of the ceramic microspheres begins to melt and form a continuous blocking layer, the blocking layer can effectively increase the thermal runaway temperature of the lithium ion battery, but cannot improve the degree of the thermal runaway of the lithium ion battery;
4, Examples 1-7 do not undergo fire and explosion in the range of 160 °C-200 °C.

It can be seen that in Examples 1-7, when the batteries reach the heat sensitive temperature range, since the conductive microspheres and the ceramic microspheres are coated with the heat sensitive polymer, the heat sensitive polymer on the surface begins to melt and forms a continuous blocking layer, and the blocking layer can effectively block the lithium ion from passing through and reduce the degree of the thermal runaway; and meanwhile, the blocking layer can form a continuous electronic channel due to the conductive agent contained therein, form a micro short circuit inside the lithium battery, thereby effectively improving the safety performance of the lithium ion battery.

The embodiments of the present invention have been described above. However, the present invention is not limited to the above embodiments. Any modifications, equivalent replacements and improvements etc. made within the spirit and principles of the present invention should be included within the protection scope of the present invention.

## Claims

1. A ceramic microsphere, having a core-shell structure, namely including a shell and a core, wherein a material for forming the shell comprises a heat sensitive polymer and a conductive agent, and a material for forming the core comprises a ceramic material.

2. The ceramic microsphere according to claim 1, wherein in the ceramic microsphere, a mass ratio of the shell to the core is (0.2-1300): (50-80); and/or
in the ceramic microsphere, a mass ratio of the heat sensitive polymer and the conductive agent for forming the shell is (100-1000): (1-10); and/or
in the ceramic microsphere, a thickness of the shell is 1 nm-5000 nm; and/or
in the ceramic microsphere, an average particle diameter of the ceramic microsphere is 0.01 µm-20 µm.

3. A preparation method of the ceramic microsphere according to claim 1 or 2, comprising the following steps:
coating a material for forming a shell, comprising a heat sensitive polymer and a conductive agent, onto a surface of a material for forming a core, comprising a ceramic material, by using a liquid phase coating method or a solid phase coating method, to prepare a ceramic microsphere; wherein the ceramic microsphere has a core-shell structure, namely, comprising a shell and a core, the material for forming the shell comprises the heat sensitive polymer and the conductive agent, and the material for forming the core comprises the ceramic material.

4. The preparation method according to claim 3, wherein in the case of using the liquid phase coating method, the liquid phase coating method comprises:
dissolving the material for forming the shell into a solvent under stirring to form a solution containing the material for forming the shell; adding the material for forming the core into the solution, and uniformly mixing them under stirring; and removing the solvent in the mixed system by vacuum heating drying or spray drying etc., to obtain the ceramic microsphere, wherein the ceramic microsphere has a core-shell structure, namely, comprising a shell and a core, the material for forming the shell comprises the heat sensitive polymer and the conductive agent, and the material for forming the core comprises the ceramic material, or
in the case of using the solid phase coating method, the solid phase coating method comprises:
performing solid phase coating of the material for forming the shell and the material for forming the core by stirring, ball milling and mechanical fusing, and then heating them to a temperature in a heat sensitive range of the heat-sensitive polymer, so that the material for forming the shell forms a coating layer on the surface of the material for forming the core.

5. A diaphragm, comprising a diaphragm base layer and a coating layer on at least one surface of the diaphragm base layer, wherein the coating layer is obtained by coating a mixed system comprising a conductive microsphere and the ceramic microsphere according to claim 1 or 2 onto the at least one surface of the diaphragm base layer.

6. The diaphragm according to claim 5, wherein the conductive microsphere has a core-shell structure, namely, comprising a shell and a core, a material for forming the shell comprises a heat sensitive polymer, and a material for forming the core comprises a conductive material;
preferably, in the conductive microsphere, a mass ratio of the shell to the core is (0.5-640): (50-80);
preferably, in the conductive microsphere, a thickness of the shell is 1 nm-2000 nm;
preferably, an average particle diameter of the conductive microsphere is 0.01 µm-10 µm; and
preferably, a particle diameter of the conductive microsphere is 0.01 µm-8 µm.

7. The diaphragm according to claim 5 or 6, wherein the mixed system further comprises at least one of polymer binder and auxiliary agent; and
preferably, parts by mass of components in the mixed system are as follows:
5-60 parts by mass of the conductive microsphere, 20-180 parts by mass of the ceramic microsphere, 0-20 parts by mass of the polymer binder and 0-10 parts by mass of the auxiliary agent.

8. The diaphragm according to claim 7, wherein parts by mass of the components in the mixed system are as follows:
5-40 parts by mass of the conductive microsphere, 20-150 parts by mass of the ceramic microsphere, 1-20 parts by mass of the polymer binder and 1-10 parts by mass of the auxiliary agent.

9. A preparation method of the diaphragm according to any one of claims 5-8, comprising the following steps:
(a) adding a conductive microsphere, a ceramic microsphere, optionally a polymer binder and optionally an auxiliary agent to a solvent, and mixing them to obtain a mixed slurry; and
(b) coating the mixed slurry of step (a) onto a surface of a diaphragm base layer, and drying it to obtain a diaphragm.

10. A lithium ion battery, comprising the diaphragm according to any one of claims 5-8.
